# EUROPÄISCHE PATENTANMELDUNG

(11) **EP 1 137 163 A2**
(43) Veröffentlichungstag der Anmeldung: **26.09.2001**
(21) Anmeldenummer: 01000046.1
(22) Anmeldetag: 09.03.2001
(51) Int. Cl.: H02P 6/08

(54) **Einphasig gespeistes Antriebssystem**

(30) Priorität: 21.03.2000 DE 10013692
(71) Anmelder: Philips Corporate Intellectual Property GmbH, 52064 Aachen (DE); Koninklijke Philips Electronics N.V., 5621 BA Eindhoven (NL)
(72) Erfinder: Lürkens, Peter, Dr., Philips Corp. Int. Prop. GmbH, 52064 Aachen (DE)
(74) Vertreter: Volmer, Georg, Dipl.-Ing.

(57) **Zusammenfassung**

Ein Antriebssystem bestehend aus einem Gleichrichter, einem Hochfrequenzfilter, einem Wechselrichter und einem Induktionsmotor wird ohne Energiespeicher vom Einphasennetz gespeist betrieben, wobei durch Verwendung eines Hüllkurvengenerators mit einem netzsynchronen, vorzugsweise sinusförmigem Signal, das bewirkt, dass dem Wechselrichterausgangasignal eine vorzugsweise sinusförmige Hüllkurve vorzeichenbehaftet überlagert wird, unzulässige Stromoberschwingungen im Einphasennetz verhindert werden. Dabei werden evtl. Schwankungen der Zwischenkreisspannung kompensiert.

In weiteren Ausgestaltungen der Erfindung wird die dafür vorteilhafte Betriebsfrequenz des Wechselrichters automatisch mit Hilfe eines PLL-Regelkreises eingestellt, indem die Phasenverschiebung zwischen Zwischenkreisstrom und Hüllkurvensignal ausgewertet wird.

In einer weiteren Ausgestaltung der Erfindung wird die dafür vorteilhafte Betriebsfrequenz durch Hinzuaddieren eines bestimmten Frequenzunterschiedes zur Motordrehzahl gewonnen.

In weiteren Ausgestaltungen der Erfindung stellt die Hüllkurve direkt ein Abbild des Verlaufs der Spannung des Einphasennetzes dar.

## Beschreibung

Seit langem ist der Wechselstrom-Universalmotor der am meisten verbreitete Motor in kleinen Haushaltsgeräten und Elektrowerkzeugsn die aus dem Einphasennetz gespeist werden. Obwohl er eine Reihe von Nachteilen aufweist, wie geringe Lebensdauer, schlechter Wirkungsgrad, lautes Geräusch, ist er wegen seiner geringen Kosten weit verbreitet.

Seit einiger Zeit schon werden Lösungen mit elektronisch kommutierten Motoren vorgeschlagen, die sich jedoch aufgrund der höheren Kosten nicht durchsetzten. Der Kostennachteil wird von der notwendigen Leistungselektronik verursacht, die eine Gleichstromquelle in ein Drehstromsystem umwandelt und hierzu mehrere Leistungshalbleiter (meist sechs) benötigt. Außerdem wird ein nicht unwesentlicher Zusatzaufwand dadurch verursacht, dass eine weitere leistungselektronische Schaltung (meist ein sog. Hochsetzsteller) benötigt wird, um den Oberschwingungsgehalt des Netzeingangsstromes unterhalb gesetzlich geforderter Grenzwerte zu halten. Diese Schaltung enthält weitere leistungselektronische Bauelemente sowie einen teuren Elektrolytkondensator. Dieser Teil der Schaltung macht etwa ein Drittel der Gesamtkosten aus.

### Stand der Technik

Ein bekanntes Verfahren zur Speisung von Asynchronmotoren ohne Energiespeicher setzt einen sogenannten Direktumrichter ein (Sämann, EP0489970, Fig. 9). Bei diesem Verfahren ist aber die Ausgangsfrequenz des Wechselrichters auf etwa 1/3 der Netzfrequenz begrenzt. Dadurch eignet sich das Verfahren nicht für Antriebe mit Drehzahlen größer als etwa 950 min-1.

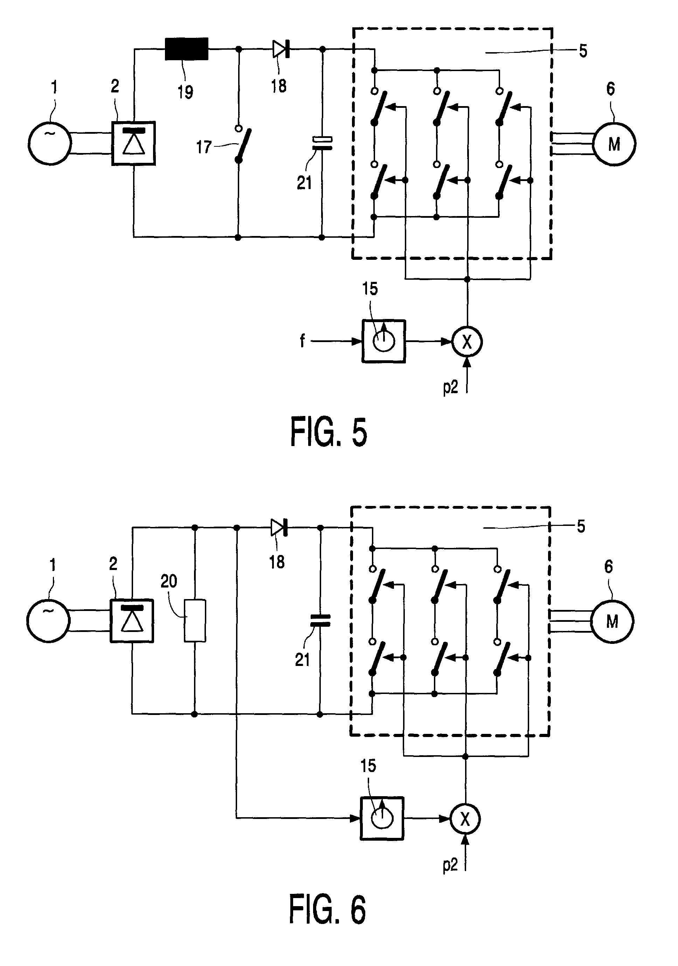

Ein weiteres Verfahren, welches in Fig. 5 der Zeichnung dargestellt und in "Undeland, Mohan, Robbins: Power Electronics: Converters Applications and Design, Wiley & Sons, 1989, S.415 ff.", beschrieben wird, benutzt einen sogenannten Hochsetzsteller zur Bereitstellung einer hohen in etwa konstanten Zwischenkreisspannung, aus der ein Wechselrichter gespeist werden kann. Gleichzeitig wird der Netzeingangsstrom so geregelt dass sich ein nahezu sinusförmiger Stromverlauf ergibt. Diese Schaltung benötigt zusätzlich einen Energiespeicher (21, i.d.R. ein Elektrolytkondensator), einen Halbleiterschalter (17) eine Leistungsdrossel (19) sowie eine Hochfrequenzdiode (18). Dieses Verfahren ist universell einsetzbar, weist jedoch den Nachteil höherer Kosten auf.

Aus der DE 19729705 ist ein Verfahren bekannt, das durch Verringern des Zwischenkreiskondensators und einer speziellen Phasenumschaltung des Wechselrichters einen auf den ersten Blick ähnlich erscheinenden Effekt erzielt wie die vorliegende Erfindung. Die zugehörige möglich, die Leistung beliebig zu verringern, da dann diese Phasenumschaltung bei noch nicht entladenem Zwischenkreiskondensator erfolgt. Dies hat inakzeptabel hohe Ströme im Wechselrichter zur Folge, außer allenfalls bei hochtourigen Motoren mit genügend hoher Streuung Daher eignet sich das Verfahren nicht für niedrige Drehzahlen und für in weiten Bereichen leistungsverstellbare Antriebe.

In einem weiteren Verfahren, das aus der EP 0711470 bekannt und in Fig. 6 skizziert ist, wird auf die Phasenumschaltung aus der DE 19729705 verzichtet und statt dessen eine Frequenzmodulation benutzt, um den Antrieb geeignet betrieben zu können. Es zeigt sich jedoch, dass dennoch im Netznulldurchgang unerwünschte Schwingungen im Netzstrom auftreten können, die bei mittleren Leistungen ein Überschreiten der Oberschwingungsgrenzen bewirken. Die Anwendung ist auf Antriebe hoher Drehzahl und mit einer Leistung, die im Betrieb nicht unter einen Minimalwert sinken darf, begrenzt.

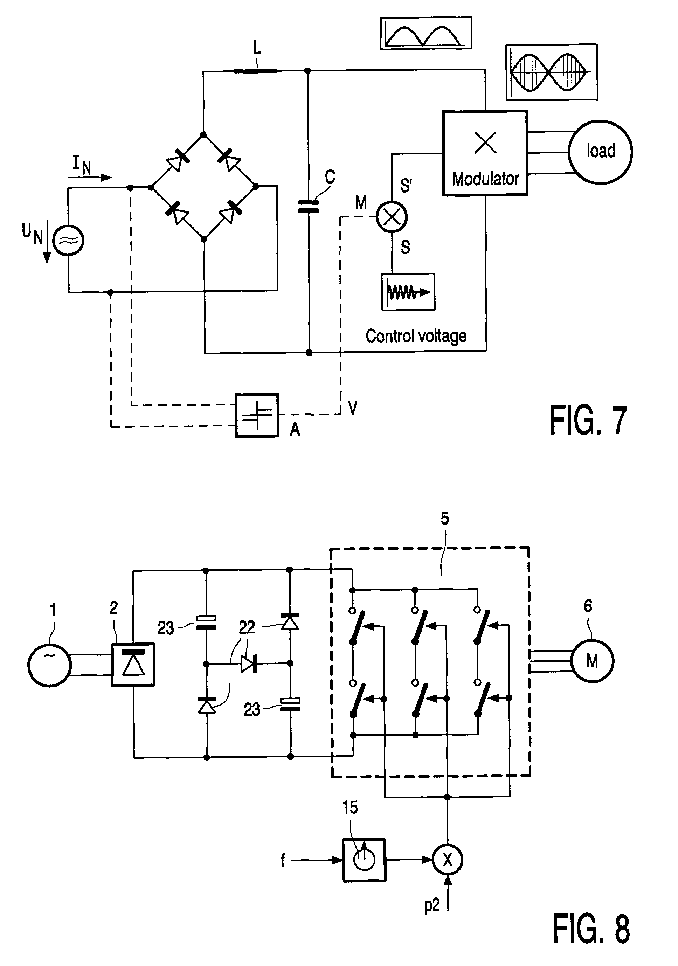

Es sind weitere Verfahren bekannt, die es mit Hilfe einer speziellen Anordnung von Dioden und Speicherkondensatoren (zB. "Valley-Fill circuit", dargestellt in Fig. 8) erreichen, dass trotz eines vorhandenen Speicherkondensators im Zwischenkreis Strom während eines größeren Teils der Netzperiode fließt. Diese Schaltungen beeinflussen hauptsächlich den Stromflusswinkel im Netz Es ist aber nicht möglich, den Netzstrom-Oberschwingungsgehalt ausreichend zu reduzieren, um Antriebe mittlerer und höherer Leistung zu ermöglichen.

### Kurzbeschreibung der Erfindung

Das erfindungsgsmäße Antriebssystem besteht aus einem Gleichrichter, einem Hochfrequenzfilter, einem Wechselrichter und einem Induktionsmotor und wird ohne Energiespeicher vom Einphasennetz gespeist betrieben, wobei durch Verwendung eines Hüllkurvengenerators mit einem netzsynchronen, vorzugsweise sinusförmigem Signal, das bewirkt, dass dem Wechselrichterausgangssignal eine vorzugsweise sinusförmige Hüllkurve vorzeichenbehaftet überlagert wird, unzulässige Stromoberschwingungen im Einphasennetz verhindert werden. Dabei werden evtl. Schwankungen der Zwischenkreisspannung kompensiert.

In weiteren Ausgestaltungen der Erfindung wird die dafür vorteilhafte Betriebsfrequenz des Wechselrichters automatisch mit Hilfe eines PLL-Regelkreises eingestellt, indem die Phasenverschiebung zwischen Zwischenkreisstrom und Hüllkurvensignal ausgewertet wird.

In einer weiteren Ausgestaltung der Erfindung wird die dafür vorteilhafte Betriebsfrequenz durch Hinzuaddieren eines bestimmten Frequenzunterschiedes zur Motordrehzahl gewonnen.

In weiteren Ausgestaltungen der Erfindung stellt die Hüllkurve direkt ein Abbild des Verlaufs der Spannung des Einphasennetzes dar.

Die vorliegende Erfindung zeigt eine Methode auf, wie ein sog. Induktions- oder Asynchronmotor in seinem gesamten Drehzahlbereich vorteilhaft aus dem Einphasennetz betrieben werden kann, so dass der Oberschwingungsgehalt des Netzeingangsstromes der Schaltung unterhalb der zulässigen Obergrenzen bleibt. Außerdem kann der Antrieb beliebig in seiner Leistung verstellt werden. Mit Hilfe eines aktiven Netzgleichrichters ist es außerdem möglich, einen Generatorbetrieb zu realisieren. Damit ist es möglich, elektronisch kommutierte, drehzahlgeregelte Antriebe für praktisch jeden Drehzahlbereich und nahezu jede Anwendung zu geringen Kosten herzustellen. Eine prinzipielle Einschränkung des Leistungsbereiches, wie bei allen anderen Verfahren gegeben, ist damit entfallen. Somit können Antriebe bis zur typischen Leistungsgrenze des Einphasennetzes von 3 kW realisiert werden.

### Beschreibung der Figuren

Figur 1 zeigt eine erfindungsgeinäße Anordnung mit netzsynchroner Erzeugung einer beliebigen bipolaren Hüllkurve, Kompensation der Auswirkung der Zwischenkreisspannungsänderungen auf die resultierende Hüllkurve und von außen vorgegebene Werte für die Frequenz und die Leistung des Antriebes.

Figur 2 zeigt eine weitere erfindungsgemäße Anordnung mit netzsynchroner Erzeugung einer beliebigen bipolaren Hüllkurve, Kompensation der Auswirkung der Zwischenkreisspannungsänderungen auf die resultierende Hüllkurve und mit automatischer Einstellung der Frequenz nach Art einer PLL sowie von außen vorgegebenem Wert für die Leistung des Antriebes.

Figur 3 zeigt eine weitere erfindungsgemäße Anordnung, bei der die Hüllkurve ein Abbild des Verlaufs der Netzspannung darstellt und die eine Kompensation der Auswirkung der Zwischenkreisspannungsänderungen auf die resultierende Hüllkurve und eine automatische Einstellung der Frequenz sowie einen von außen vorgegebenen Wert für die Leistung des Antriebes aufweist.

Figur 4 zeigt eine weitere erfindungsgemäße Anordnung, bei der die Hüllkurve ein Abbild des Verlaufs der Netzspannung darstellt und die eine Kompensation der Auswirkung der Zwischenkreisspannungsänderungen auf die resultierende Hüllkurve sowie von außen vorgegebene Werte für die Frequenz und für die Leistung des Antriebes aufweist.

Figur 5 zeigt eine Anordnung die den Stand der Technik repräsentiert, unter Verwendung eines auch universell einsetzbaren Hochsetzstellers und eines Energiespeichers.

Figur 6 zeigt eine weitere, den Stand der Technik repräsentierende Anordnung unter Verwendung einer Frequenzmodulation in Abhängigkeit von der Zwischenkreisspannung.

Figur 7 zeigt eine weitere, den Stand der Technik repräsentierende Anordnung unter Verwendung einer Phasenumschaltung ("Phasensprung") des Wechselrichtersteuersignals in Abhängigkeit von der Polarität der Netzeingangsspannung.

Figur 8 zeigt eine weitere, den Stand der Technik repräsentierende Anordnung unter Verwendung einer sog. "Valley-Fill-Schaltung" zur Verlängerung der Stromflussdauer im Einphasennetz.

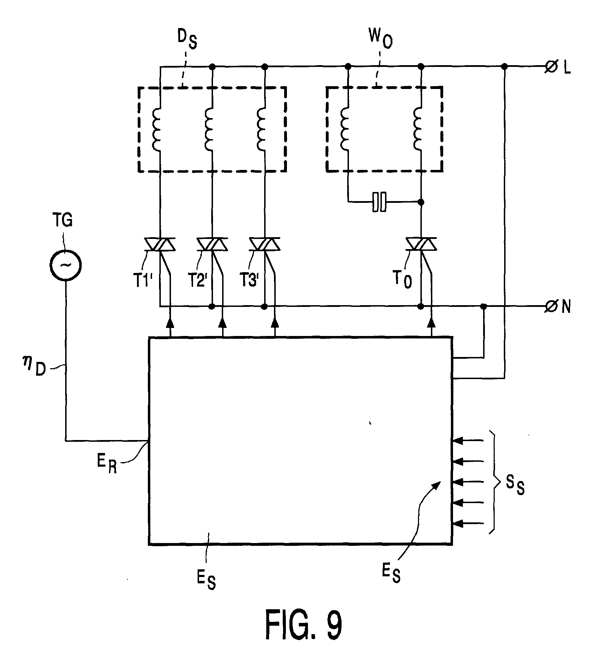

Figur 9 zeigt eine weitere, den Stand der Technik repräsentierende Anordnung unter Verwendung einer Schaltung mit Direktumrichter.

### Detaillierte Beschreibung der Erfindung

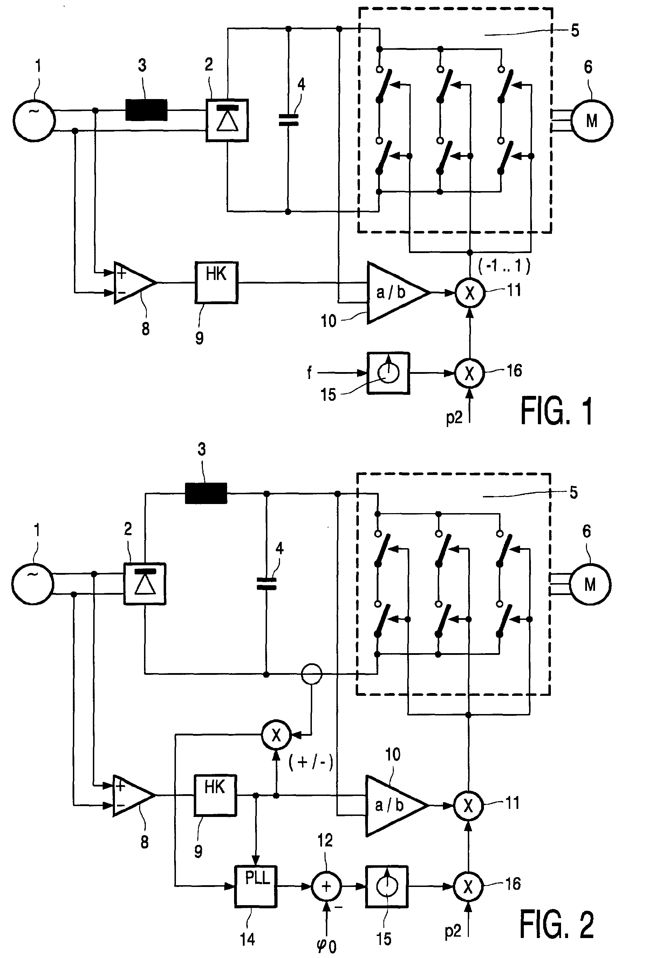

In Figur 1 ist ein bevorzugtes Ausführungsbeispiel eines erfindungsgemäßen Antriebs wiedergegeben. Eine einphasige Wechselspannungsquelle (1), z.B. gebildet durch das 50 Hz-Einphasennetz, speist über eine Drossel (3), die zur Dämpfung der Hochfrequenzstörungen des Wechselrichters geeignet und eingerichtet ist, einen Gleichrichter (2). An dessen Ausgang befindet sich ein Filterkondensator (4), der ebenfalls in erster Linie zur Dämpfung der Hochfrequenzstörungen des Wechselrichters dient und keine Speicherfunktion erfüllen muss. Dadurch kann der Filterkondensator klein und preiswert dimensioniert werden. An diesen ist ein vorzugsweise dreiphasiger Wechselrichter (5) angeschlossen, der mit einem Asynchronmotor (6) verbunden ist.

Ein Modulator (15) erzeugt ein mit einstellbarer Frequenz (f) rotierendes Mehrphasensystem mit nach Art einer Pulsweitenmodulation veränderbarer Amplitude. Zur Leistungseinstellung des Antriebes kann sowohl die Frequenz (f) als auch die Amplitude des Modulatorsignals mit Hilfe eines Steuerparameters P² über eine Stellstufe (15) verändert werden.

Das Ausführungsbeispiel nach Fig. 1 umfasst ferner eine Messstufe (8), die zum Messen der Spannung der Wechselspannungsquelle (1) eingerichtet ist. Die Messstufe (8) stellt an ihrem Ausgang einen Messwert der Spannung der Wechselspannungsquelle (1) zur Verfügung. Dieser Messwert kann ein Abbild des Augenblickswertes der Spannung der Wechselspannungsquelle (1) sein, liefert aber zumindest ein Signal mit einer Information über das Vorzeichen der Spannung der Wechselspannungsquelle (1), d.h. der Netzspannung.

Der Ausgang der Messstufe (8) ist mit einem Eingang eines Hüllkurvengenerators (HK, Bezugsziffer 9) verbunden, der zum Erzeugen eines Hüllkurvensignals eingerichtet ist. Dieses wird vom Hüllkurvengenerator HK (9) an einem Ausgang abgegeben, der mit einem der Eingänge einer Divisionsstufe (10) gekoppelt ist. Ein zweiter Eingang der Divisionsstufe (10) ist mit dem Ausgang des Gleichrichters (2) verbunden; diesem zweiten Eingang wird die Zwischenkreisspannung der Anordnung zugeführt. Ein Ausgang der Divisionsstufe (10) für ein von der Divisionsstufe (10) abgegebenes Quotientensignal ist mit einem Eingang einer ersten Multiplikationsstufe (11) verbunden, deren zweiter Eingang mit dem Ausgang einer zweiten Multiplikationsstufe (16) verbunden ist. Über die Multiplikationsstufen (11 und 16) werden Stellwerte, d.h. Signale zur Leistungseinstellung - das sind hier Signale zur Einstellung der Frequenz (f) wie auch der Amplitude des Modulatorsignals (P²) - miteinander und mit dem Quotientensignal multiplikativ zum Bilden von Kommutatorsignalen zur Ansteuerung des Wechselrichters (5) verknüpft. Diese Kommutatorsignale nehmen bevorzugt wahlweise Werte von minus 1 bis plus 1 an.

Wesentlich ist nun, dass über eine Messung in der Messstufe (8) von mindestens dem Vorzeichen der Netzspannung der Hüllkurvengenerator HK (9) so gesteuert wird, dass er das Hüllkurvensignal, welches vorzugsweise eine Sinusfunktion ist, netzsynchron erzeugt.

Mit dieser Hüllkurve und der augenblicklichen Zwischenkreisspannung wird durch eine Division in der Divisionsstufe (10) schließlich eine Korrekturfunktion gebildet, mit der die Amplitude des Modulatorausgangssignals in der ersten Multiplikationsstufe (11) vorzeichenbehaftet multipliziert wird. Dabei entspricht einer Multiplikation mit negativen Vorzeichen ein Phasensprung der Wechselrichterausgangsspannung um 180 Grad. Dadurch ergibt sich, dass die Hüllkurve der Wechselrichter-Ausgangsspannung unabhängig vom tatsächlichen Verlauf der Zwischenkreisspannung dem vom Hüllkurvengenerator vorgegebenen Verlauf entspricht. Da eine Korrektur natürlich nicht mehr möglich ist, wenn nur gelingen, wenn die vorgegebene Hüllkurve stets unterhalb der tatsächlichen Zwischenkreisspannung verläuft.

Die Frequenz des Modulators und die Drehzahl des Motors bestimmen dabei das Verhalten des Wechselrichtereingangstromes des Wechselrichters (5), insbesondere kann eine zeitliche Verschiebung zwischen Strom und Spannung damit beeinflusst werden. Bei richtiger Wahl der Frequenz (f) in Abhängigkeit von der Motordrehzahl kann erreicht werden, dass Strom und Spannung am Wechselrichtereingang in Phase sind, was in der Regel gewünscht ist. Zur vorteilhaften Regelung des Antriebes können die Stellwerte für die Frequenz (f) und die Leistung (Stellwert P²) des Antriebes zum Beispiel von einem Mikrocontroller errechnet werden. Eine Einstellung von Hand ist jedoch ebenso möglich.

Wenn Netzfrequenz und Wechselrichterausgangsfrequenz nahezu gleich sind, ist allerdings eine Hüllkurve nicht mehr erkennbar, statt dessen bildet sich eine Schwebung aus. Dies ist jedoch für die Wirksamkeit des erfindungsgemäßen Antriebs nicht schädlich.

Figur 2. beschreibt in einer Abwandlung des Ausführungsbeispiels des Antriebs nach Figur 1 eine weitere erfindungsgemäße Anordnung, bei der sich im Unterschied zu Fig. 1 die Drossel (3) hinter dem Gleichrichter (2), d.h. im Zwischenkreis des Antriebes, befindet. Ein Strommesselement (7) ist in den Zwischenkreis eingefügt zum Messen des aufgenommenen Stromes Der Ausgang des Strommesselements (7) ist mit einem Eingang einer weiteren Multiplikationsstufe gekoppelt, deren zweiter Eingang mit dem Ausgang des Hüllkurvengenerators HK (9) verbunden ist. Ein Ausgang der weiteren Multiplikationsstufe ist an einen Phasenregelkreis (PLL, Bezugsziffer 14) geführt, dem auch das Hüllkurvensignal als Ausgangssignal des Hüllkurvengenerators HK (9) zugeleitet wird. Von einem Ausgang des Phasenregelkreises (PLL, Bezugsziffer 14) führt eine Verbindung an eine Additionsstufe (12), in der das Ausgangssignal des Phasenregelkreises (PLL, Bezugsziffer 14) mit einem eine vorzugsweise konstante Phasenverschiebung ϕ₀ darstellenden Signal zum Bilden des Stellwertes für die Frequenz (f) additiv verknüpft wird.
Beim Antrieb nach dem in Fig. 2 dargestellten Ausführungsbeispiel wird die Frequenz automatisch eingestellt, indem der Phasenregelkreis (PLL, Bezugsziffer 14) den Messwert des Stromes im Zwischenkreis bzw. im Wechselrichtereingang, der vom Ausgang des Strommesselements (7) geliefert wird, nach Multiplikation mit dem vom Ausgang des Hüllkurvengenerators HK (9) gelieferten Vorzeichen des Hüllkurvensignals ständig mit dem Hüllkurvensignal vergleicht und danach die Frequenz des Modulators so eingestellt wird, dass eine vorteilhafte Phasenverschiebung ϕ₀ (als Sollwert über die Additionsstufe (12) bereitgestellt) eingehalten wird. Die vorteilhafte Phasenverschiebung ist beim stationären Betrieb des Antriebes im wesentlichen konstant. Wie oben könnte dieser Wert z.B. von einem Mikrocontroller vorgegeben werden.

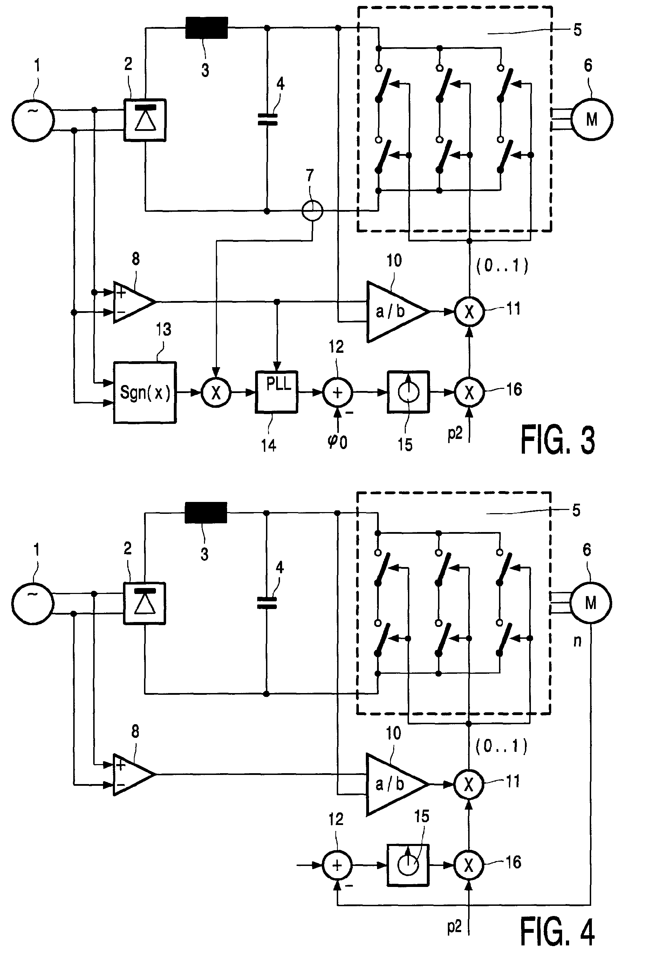

Fig 3 zeigt als Weiterbildung des Ausführungsbeispiels nach Fig. 2 ein weiteres Ausführungsbeispiel eines erfindungsgemäßen Antriebes, bei dem das Hüllkurvensignal unmittelbar aus dem Signal der Netzspannung von der Wechselspannungsquelle (1) gewonnen wird, und demgemäss der Messwert des Stromes von der Strommessstufe (7) mit dem Vorzeichen der Netzspannung multipliziert wird. Dazu ist der Hüllkurvengenerator HK (9) aus Fig. 2 durch eine Vorzeichenbildungsstufe (Sign(x), Bezugsziffer 13) ersetzt, deren Ausgang an Stelle des Ausgangs des Hüllkurvengenerators HK (9) mit dem zweiten Eingang der weiteren Multiplikationsstufe verbunden ist. Der Ausgang der Messstufe (8) ist unmittelbar mit dem ersten Eingang der Divisionsstufe (10) und dem Phasenregelkreis (PLL, Bezugsziffer 14) verbunden.

Fig. 4 zeigt in einer weiteren Abwandlung des Ausführungsbeispiels nach Fig. 1 eine weitere Ausführungsform des erfindungsgemäßen Antriebs, bei der die geeignete Frequenz dadurch gewonnen wird, dass auf die mechanische Frequenz des Motors (Drehzahl x Polpaarzahl) eine vorgegebene Frequenzdifferenz aufaddiert wird. Diese Anordnung umfasst außer den in Fig. 1 dargestellten Elementen die zu Fig 2 beschriebene Additionsstufe (12), in der ein die Drehzahl des Motors M (6) repräsentierendes Signal mit dem die vorzugsweise konstante Phasenverschiebung ϕ₀ darstellenden Signal zum Bilden des Stellwertes für die Frequenz (f) additiv verknüpft wird.

## Patentansprüche

1. Aus einer Einphasen-Wechselstromquelle gespeistes Antriebssystem, bestehend mindestens aus einem Gleichrichter, einer davor oder dahinter angeordneten Filterspule, einem Filterkondensator, einem vorzugsweise mehrphasigen Wechselrichter variabler Frequenz und einstellbarer Ausgangsspannungsamplitude und einem Induktionsmotor, der von dem Wechselrichter gespeist wird,
**dadurch gekennzeichnet,**
**dass** ein netzsynchroner Hüllkurvengenerator ein bipolares Signal erzeugt, mit dem die Amplitude der Ausgangsspannung des Wechselrichters im Sinne einer vorzeichenbehafteten Multiplikation des ursprünglichen Signals so modifiziert wird, dass die Hüllkurve der am Motor anliegenden Spannung dem Signal des Hüllkurvengenerators im wesentlichen gleicht, und zwar unabhängig vom Verlauf der tatsächlichen Zwischenkreisspannung.

2. Antrieb nach Anspruch 1,
**dadurch gekennzeichnet**
**dass** die Kompensation der momentanen Zwischenkreisspannung dadurch erfolgt, dass das Hüllkurvensignal durch den momentanen Wert der Zwischenkreisspannung dividiert wird.

3. Antrieb nach Anspruch 1 oder 2,
**dadurch gekennzeichnet,**
**dass** das Hüllkurvensignal im wesentlichen eine Sinusfunktion ist.

4. Antrieb nach Anspruch 1 oder 2,
**dadurch gekennzeichnet,**
**dass** die Hüllkurve direkt dem Verlauf der Netzspannung entspricht.

5. Antrieb nach Anspruch 1, 2, 3 oder 4,
**dadurch gekennzeichnet,**
**dass** eine automatische Regelung der Wechselrichterfrequenz nach Art einer PLL so erfolgt, dass sich nach einer Multiplikation des Vorzeichens des Stroms im Wechselrichtereingang mit dem Vorzeichen des Hüllkurvensignals eine vorgegebene Phasenverschiebung, vorzugsweise 0 Grad, zwischen Strom im Wechselrichtereingang und dem Hüllkurvensignal ergibt.

6. Antrieb nach Anspruch 1, 2, 3 oder 4,
**dadurch gekennzeichnet,**
**dass** eine automatische Regelung der Wechselrichterfrequenz dadurch erreicht wird, dass ein fester Wert zur mechanischen Frequenz des Motor (Drehzahl x Polpaarzahl) hinzuaddiert wird.

7. Antrieb nach einem der vorhergehenden Ansprüche,
**dadurch gekennzeichnet,**
**dass** der Gleichrichter aus bidirektionalen leistungselektronischen Bauelementen, vorzugsweise MOSFET-Transistoren oder IGBT-Transistoren mit Freilaufdiode, besteht.
